# EUROPEAN PATENT APPLICATION

(11) **EP 3 125 541 A1**
(43) Date of publication of application: **01.02.2017**
(21) Application number: 14887068.6
(22) Date of filing: 25.09.2014
(51) Int. Cl.: H04N 7/173, H04N 21/437

(54) **DATA ACQUISITION AND INTERACTION METHOD, SET TOP BOX, SERVER AND MULTIMEDIA SYSTEM**

(30) Priority: 24.03.2014 CN 201410111363
(71) Applicant: ZTE Corporation, Shenzhen, Guangdong 518057 (CN)
(72) Inventor: QIAN, Yongfu, Shenzhen Guangdong 518057 (CN); SUN, Sihui, Shenzhen Guangdong 518057 (CN); YIN, Chengshui, Shenzhen Guangdong 518057 (CN); SHEN, Benming, Shenzhen Guangdong 518057 (CN)
(74) Representative: Brevalex
(86) International application number: PCT/CN2014/087465
(87) International publication number: WO 2015/143854

(57) **Abstract**

Disclosed are a set top box, an electronic program server, a multimedia system and a data interaction method. During multimedia data interactions, a set top box directly sends a request to an electronic program server, and the electronic program server downloads, according to the request, corresponding multimedia data from the Internet and feeds back the multimedia data to the set top box, unlike the prior art in which the set top box directly downloads multimedia data from the Internet. The electronic program server has much better performance than the set top box, and can acquire a large amount of multimedia information from the Internet more rapidly and reliably than the set top box, so that the time required for accessing multimedia such as videos is greatly reduced, and the satisfaction in user experience is improved.

## Description

### TECHNICAL FIELD

The disclosure relates to the field of communications, and in particular to a multimedia data acquisition method, a multimedia data sending method, a multimedia data interaction method, a set top box, an Electronic Program Guide (EPG) server and a multimedia system.

### BACKGROUND

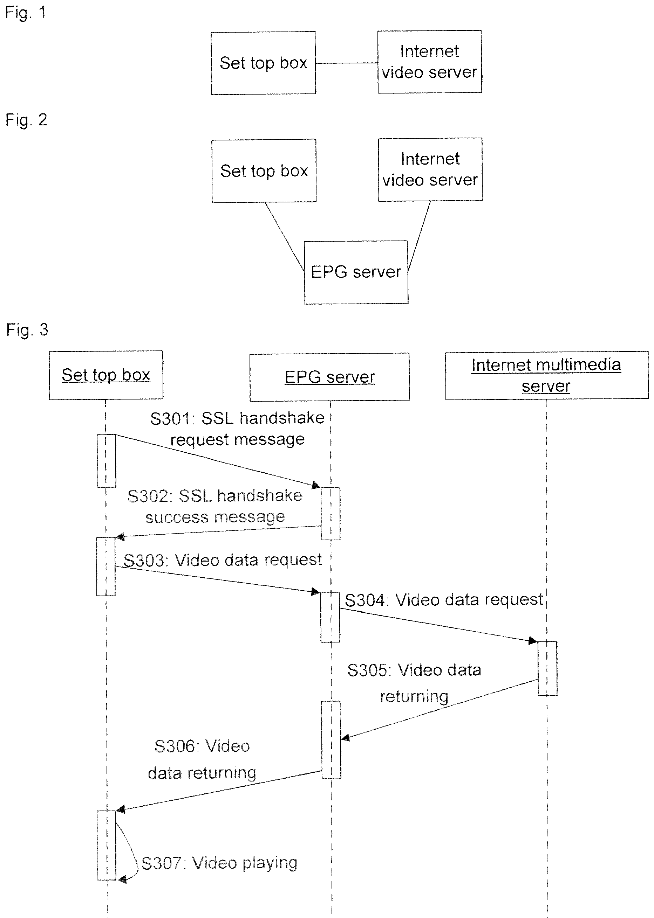

As an Over The Top (OTT) video technology develops rapidly, access of an Internet Protocol Television (IPTV) set top box to an OTT video server has been regularly demanded. However, at present, a set top box and a Personal Computer (PC) both have access to Internet video resources by directly connecting to the Internet, as shown in Fig. 1. There is a great difference between the performance of the set top box and the performance of the PC, thus the problem of resource asymmetry is caused, namely high Internet transmission rate and large video transmission information amount versus limited information processing capability of the set top box. Therefore, how to avoid long time required for access of an IPTV set top box to an OTT video and low satisfaction in user experience due to resource asymmetry becomes a problem to be solved urgently.

### SUMMARY

Embodiments of the disclosure provide a multimedia data acquisition method, a multimedia data sending method, a multimedia data interaction method, a set top box, an Electronic Program Guide (EPG) server and a multimedia system, which are intended to solve the main technical problems of long time required for video access and low satisfaction in user experience caused by asymmetry between an existing set top box and Internet resources.

In view of this, an embodiment of the disclosure provides a multimedia data acquisition method, which may include that:
a set top box sends a multimedia data acquisition request to an EPG server; and
the set top box receives multimedia data fed back by the EPG server according to the multimedia data request.

In one embodiment of the disclosure, the method may further include that: before the set top box sends the multimedia data acquisition request to the EPG server,
a multimedia user interface acquisition request is sent to the EPG server;
multimedia user interface data fed back by the EPG server according to the multimedia user interface acquisition request is received and loaded; and
a multimedia data acquisition instruction sent by a user via a multimedia user interface is received, and the multimedia data acquisition request is generated.

In one embodiment of the disclosure, the method may further include that: in the process of receiving the multimedia data and/or in the process of loading the multimedia user interface data, the set top box plays a pre-set progress prompt animation.

In one embodiment of the disclosure, the method may further include that: in the process of loading the multimedia user interface data by the set top box, when a multimedia player data download notice sent by the EPG server is received, corresponding multimedia player data is downloaded and stored according to the multimedia player data download notice; and when the multimedia data is played, the stored multimedia player data is directly called to generate a corresponding player.

In one embodiment of the disclosure, the method may further include that: in the process of calling the multimedia player data to generate the player, an interface of the player is expanded.

An embodiment of the disclosure also provides a multimedia data sending method, which may include that:
an EPG server receives a multimedia data acquisition request sent by a set top box; and
the EPG server acquires corresponding multimedia data according to the multimedia data acquisition request, and sends the multimedia data to the set top box.

In one embodiment of the disclosure, the method may further include that: before the EPG server receives the multimedia data acquisition request sent by the set top box,
a multimedia user interface acquisition request sent by the set top box is received; and
multimedia user interface data is fed back to the set top box according to the multimedia user interface acquisition request.

In one embodiment of the disclosure, the multimedia user interface data may include main interface data generated by the EPG server according to multimedia classes in a multimedia website, and multimedia list data generated according to current program information under each class.

In one embodiment of the disclosure, the method may further include that: when determining that the multimedia user interface data requested by the set top box is user interface data of an encrypted multimedia website, the EPG server sends a multimedia player data download notice to the set top box in a process of loading the multimedia user interface data by the set top box.

An embodiment of the disclosure also provides a multimedia data interaction method, which may include that:
a set top box sends a multimedia data acquisition request to an EPG server;
the EPG server acquires corresponding multimedia data according to the multimedia data acquisition request, and feeds the multimedia data back to the set top box; and
the set top box receives multimedia data fed back by the EPG server.

An embodiment of the disclosure also provides a set top box, which may include a multimedia data request module and a multimedia data acquisition module, in which:
the multimedia data request module is configured to send a multimedia data acquisition request to an EPG server; and
the multimedia data acquisition module is configured to receive multimedia data fed back by the EPG server according to the multimedia data request.

In one embodiment of the disclosure, the set top box may further include a user interface data request module and a user interface data acquisition module, in which:
the user interface data request module is configured to send, before the multimedia data request module sends the multimedia data acquisition request to the EPG server, a multimedia user interface acquisition request to the EPG server; and
the user interface data acquisition module is configured to receive and load multimedia user interface data fed back by the EPG server according to the multimedia user interface acquisition request.

In one embodiment of the disclosure, the set top box may further include a player data acquisition module configured to download and store, when a multimedia player data download notice sent by the EPG server is received in the process of loading the multimedia user interface data by the user interface data acquisition module, corresponding multimedia player data according to the multimedia player data download notice.

When executing processing, the multimedia data request module, the multimedia data acquisition module, the user interface data request module, the user interface data acquisition module and the player data acquisition module can be implemented using a Central Processing Unit (CPU), a Digital Signal Processor (DSP) or a Field-Programmable Gate Array (FPGA).

An embodiment of the disclosure also provides an EPG server, which may include a multimedia data response module and a multimedia data processing module, in which:
the multimedia data response module is configured to receive a multimedia data acquisition request sent by a set top box; and
the multimedia data processing module is configured to acquire corresponding multimedia data according to the multimedia data acquisition request, and send the multimedia data to the set top box.

In one embodiment of the disclosure, the EPG server may further include a user interface data response module and a user interface data processing module, in which:
the user interface data response module is configured to receive, before the multimedia data response module receives the multimedia data acquisition request sent by the set top box, a multimedia user interface acquisition request sent by the set top box; and
the user interface data processing module is configured to feed back multimedia user interface data to the set top box according to the multimedia user interface acquisition request.

In one embodiment of the disclosure, the EPG server may further include a user data generation module, configured to generate the multimedia user interface data, wherein the generated user interface data includes main interface data generated according to multimedia classes in a multimedia website and multimedia list data generated according to current program information under each class.

In one embodiment of the disclosure, the EPG server may further include a player data download trigger module, configured to send, when determining that the multimedia user interface data requested by the set top box is user interface data corresponding to an encrypted multimedia website, a multimedia player data download notice to the set top box in a process of loading the multimedia user interface data by the set top box.

When executing processing, the multimedia data response module, the multimedia data processing module, the user interface data response module, the user interface data processing module, the user data generation module and the player data download trigger module can be implemented using a CPU, a DSP or an FPGA.

An embodiment of the disclosure also provides a multimedia system, which may include a set top box and an EPG server. The set top box may include a multimedia data request module and a multimedia data acquisition module, and the EPG server may include a multimedia data response module and a multimedia data processing module, in which:
the multimedia data request module is configured to send a multimedia data acquisition request to the EPG server;
the multimedia data response module is configured to receive the multimedia data acquisition request sent by the multimedia data request module;
the multimedia data processing module is configured to acquire corresponding multimedia data according to the multimedia data acquisition request, and feed the multimedia data back to the set top box; and
the multimedia data acquisition module is configured to receive multimedia data fed back by the multimedia data processing module.

When executing processing, the multimedia data request module, the multimedia data acquisition module, the multimedia data response module and the multimedia data processing module can be implemented using a CPU, a DSP or an FPGA.

The embodiments of the disclosure have the beneficial effects as follows.

The embodiments of the disclosure provide a multimedia data acquisition method, a multimedia data sending method, a multimedia data interaction method, a set top box, an EPG server and a multimedia system. During multimedia data interactions, a set top box directly sends a request to an EPG server, and the EPG server downloads, according to the request, corresponding multimedia data from the Internet and feeds back the multimedia data to the set top box, unlike the conventional art in which the set top box directly downloads multimedia data from the Internet. The EPG server has much better performance than the set top box, and can acquire a large amount of multimedia information from the Internet more rapidly and reliably compared to the set top box, such that time required for accessing multimedia such as videos is greatly shortened, and thus the satisfaction in user experience is improved.

### BRIEF DESCRIPTION OF THE DRAWINGS

Fig. 1 is a structural diagram of an existing multimedia system;
Fig. 2 is a structural diagram of a multimedia system provided by a first embodiment of the disclosure;
Fig. 3 is a flowchart of a process of interaction between a set top box and an EPG server provided by a first embodiment of the disclosure;
Fig. 4 is a diagram of a multimedia user main interface provided by a first embodiment of the disclosure;
Fig. 5 is a diagram of a multimedia list of a multimedia user interface provided by a first embodiment of the disclosure;
Fig. 6 is a structural diagram of a set top box provided by a second embodiment of the disclosure; and
Fig. 7 is a structural diagram of an EPG server provided by a second embodiment of the disclosure.

### DETAILED DESCRIPTION

The disclosure is further illustrated below in conjunction with the drawings and embodiments in detail.

### First embodiment:

As shown in Fig. 2, a multimedia system provided by the present embodiment includes a set top box, an EPG server and an Internet multimedia server (which may specifically be an Internet video server), connected in sequence, unlike an occasion where the set top box is directly connected to the Internet multimedia server as shown in Fig. 1. Based on the multimedia system shown in Fig. 2, during multimedia data interactions, the set top box can directly send a multimedia data acquisition request to the EPG server, and the EPG server downloads, according to the multimedia data acquisition request, corresponding multimedia data from the Internet and feeds back the multimedia data to the set top box, and it is unnecessary for the set top box to directly download the multimedia data from the Internet. It is well known that the EPG server has much better performance than the set top box, and can acquire a large amount of multimedia information from the Internet more rapidly and reliably compared to the set top box, such that time required for accessing multimedia such as videos is greatly shortened, and thus the satisfaction in user experience is improved.

Meanwhile, in the multimedia system shown in Fig. 1, the set top box directly communicates with the Internet multimedia server, wherein the session process of some multimedia websites (such as video websites) is implemented by https. In this case, a security coefficient will be relatively high. The session communication of some multimedia websites is simply implemented by http; and in this case, the security coefficient of a session therebetween is relatively low, and a risk of leakage of user information in the session process exists. Moreover, there is a great amount of attack software such as viruses and Trojan on the Internet, and the defence capability of the set top box is limited. By means of a framework shown in Fig. 2 of the present embodiment, a session process of acquiring multimedia data resources by the set top box is transferred from a session with the Internet to a session with the EPG server. The session process includes that: the set top box establishes reliable connection with the EPG server firstly and then requests the EPG server for multimedia data on the basis of this connection, and after acquiring multimedia data request information, the EPG server obtains video resources from a server cache or a video website and then transmits the video resources to the set top box. Under this communication mechanism, verification information and request information sent by the set top box, request response information about the EPG server and multimedia data fed back by the EPG server are over a security channel established by an asymmetric cryptographic algorithm, and the possibility of information leakage in a communication process is greatly reduced, and thus the security of the session process is improved; and meanwhile, the multimedia data is acquired by the EPG server from the video website, and in a data acquisition process, the EPG server can also filter fake attack software accompanying multimedia data transmission, so the set top box can directly acquire secure multimedia data from the EPG server, thereby avoiding an attack from malicious attack software. The session process (taking video data acquisition as an example), as shown in Fig. 3, includes that:
Step 301: a set top box sends an SSL handshake request message to an EPG server;
Step 302: the EPG server feeds back a response message indicative of SSL handshake success to the set top box;
Step 303: the set top box sends a video data acquisition request to the EPG server;
Step 304: the EPG server requests an Internet multimedia server for corresponding video data according to the video data acquisition request;
Step 305: the Internet multimedia server feeds back the corresponding video data to the EPG server;
Step 306: the EPG server sends the video data fed back by the Internet multimedia server to the set top box; and
Step 307: the set top box receives the video data fed back by the EPG server and plays the video data.

In addition, because information contents in a web page of an Internet video website are complicated, a user of a PC can conveniently and rapidly locate contents of interest by moving a mouse. It is difficult for a user of a set top box to locate contents of interest in a complicated page via a remote controller. As a result, in the present embodiment, under a multimedia system framework shown in Fig. 2, the EPG server can also be configured to customize and generate a multimedia user interface, and the multimedia user interface (multimedia UI) can be specifically customized to achieve a multimedia access personalized interface meeting a user requirement, thereby shortening time spent on searching for multimedia such as videos by the user, and improving the user experience.

In the present embodiment, the EPG server can specifically package an interface provided for the Internet multimedia server to obtain the multimedia user interface similar to a portal mode in a design mode. A specific Internet video website may be accessed via the multimedia user interface when the set top box is designed. The multimedia user interface generated by the EPG server in the present embodiment may specifically include main interface data and multimedia list data.

A generation process of a main interface is as follows.

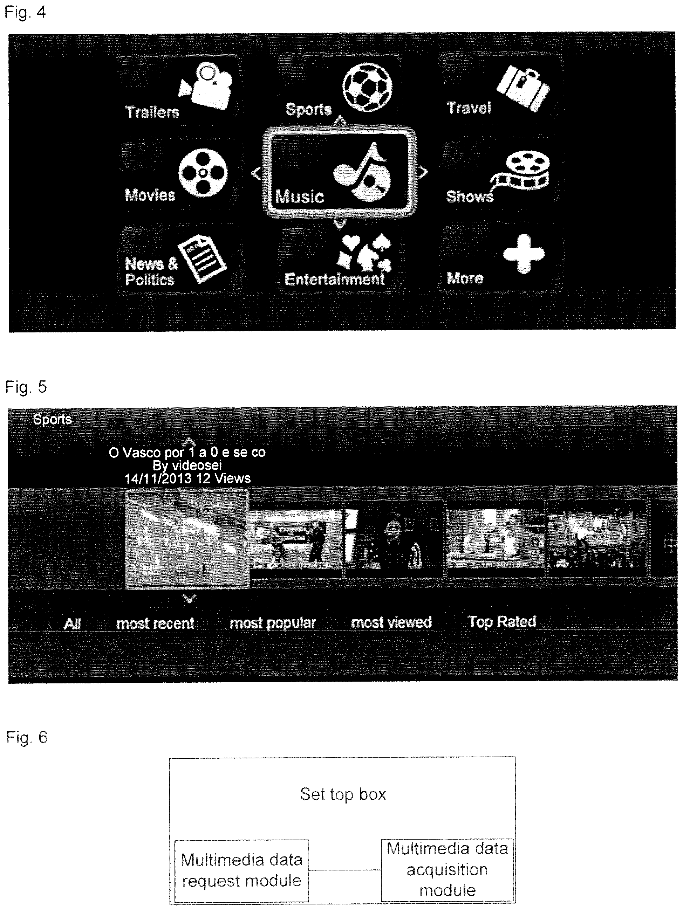

The EPG server generates the main interface data according to multimedia classes in a multimedia website, that is, the main interface can determine a layout style thereof according to specific multimedia class information in the multimedia website. A shown effect can perform personalized customization according to user demand information. Specifically, Fig. 4 shows a main interface displayed on a multimedia terminal after a set top box loads main interface data completely, the main interface containing types such as movie, music and sport.

A generation process of the multimedia list data is as follows.

The EPG server generates the multimedia list data according to current program information under each class on the main interface. Specifically, after a multimedia class is selected from the main interface and a multimedia list interface is entered, N (for instance, N=5) most recent programs or N programs having the most clicks are selected from a multimedia set contained in the multimedia class in an Internet video website, so as to be displayed. Other programs can be acquired by clicking MORE to enter a detailed program list interface. In a multimedia list interface generated after recording for the set top box is completed, the EPG server can specifically refresh time information by means of ajax in real time, thereby alleviating the layout workload of the set top box. Meanwhile, a js code generates a rolling effect of multimedia introduction information, and a blank phenomenon caused when rolling is achieved by a marquee label can be avoided. Specifically, Fig. 5 shows a multimedia list displayed on a multimedia playing terminal after a set top box loads multimedia list data completely, the list specifically displaying several video program lists ranked in the front under sport videos.

Before the set top box sends the multimedia data acquisition request to the EPG server, the set top box firstly sends a multimedia user interface acquisition request to the EPG server; the EPG server sends multimedia user interface data to the set top box after receiving the request; the set top box receives and loads the multimedia user interface data, and then plays the multimedia user interface data via a multimedia playing terminal; and in this case, a multimedia user interface greatly simplifies a page according to multimedia class information, and a user can firstly enter a video class of interest, and can then search a list interface corresponding to the class for a video of interest to be played. In this case, the set top box receives a multimedia data acquisition instruction sent by the user via the multimedia user interface to generate the corresponding multimedia data acquisition request, then sends the multimedia data acquisition request to the EPG server, and acquires corresponding multimedia data via the EPG server.

For an encrypted multimedia website, when a video link is clicked for the first time to enter a video playing page, the set top box is required to load video player data needed by a playing frame page. For instance, for the youtube website, when the video link is clicked for the first time to enter the video playing page, in order to load the playing frame page, the set top box is required to serially download eight files and download a great number of pictures and css files in parallel. According to statistics, the quantity of player data required to be downloaded is about 1.6M, time required for the set top box to complete file downloading exceeds 10s, and total required time is about 20s due to addition of js and css file parsing and page layout. If loading time for video data is added, total response time is unacceptable to the user. It is thus necessary to optimize the time. In order to avoid the problem, the present embodiment optimizes downloading of the multimedia player data specifically as follows.

According to analysis, from a perspective of the whole process of requesting a multimedia user interface and clicking a multimedia link to play multimedia by the set top box, in the process of entering a request and entering the multimedia user interface, the quantity of files required to be downloaded for the set top box is small, the quantity of data is small, and set top box resources and network resources are in an idle state; and after the multimedia link is clicked, the quantity of the files required to be downloaded for the set top box is large, the quantity of the data is large, and the set top box resources and the network resources are in a busy and blocked state. Meanwhile, a set top box browser provides a cache mechanism, and a cache region can cache js files, css files and picture files with limited sizes. Thus, the present embodiment puts download operations of some of the above files in advance. The specific operations are as follows. On the premise of slight influence on response time for requesting the multimedia user interface, some player resource files required to be downloaded during video playing are reasonably allocated to a multimedia user interface loading process, and specifically, the files can be allocated to a main interface data loading process and multimedia list data loading process of the multimedia user interface respectively to download corresponding data, and then the data is stored on the set top box. When multimedia resources are requested, the set top box discovers that the requested resources have been stored in a cache space, and the set top box directly reads files from a cache region without needing to re-download resource files from the Internet. Thus, time spent on player data loading in this process is further shortened, and the performance of the set top box and the user experience are improved.

In the present embodiment, player data may be directly downloaded by the set top box from a corresponding website, or may be downloaded by the EPG server from the corresponding website and then downloaded by the set top box from the EPG server. Thus, in the present embodiment, when determining that a multimedia user interface data requested by the set top box is user interface data of an encrypted multimedia website, the EPG server sends a multimedia player data download notice to the set top box in a process of loading, by the set top box, the multimedia user interface data sent by the EPG server; and the set top box completes download of the player data in the user interface data loading process after receiving the notice.

In the process of receiving the multimedia data and/or the process of loading the multimedia user interface data, the set top box will display a prompt animation for a current data loading progress. A current prompt animation is spliced by real-time complicated calculation, the calculation process will consume a great number of set top box resources, and if the calculation process is blocked, the prompt animation will be subjected to frame skip or will stop, so a better display effect cannot be provided while the set top box resources are occupied. Currently, in default, the prompt animation (gif animation) is formed by splicing js files via complicated calculation. In order to avoid the problem, according to the present embodiment, in the process of receiving the multimedia data by the set top box and/or in the process of loading the multimedia user interface data, the set top box directly plays a pre-set progress prompt animation, that is, the progress prompt animation has been generated in advance and there is no need to temporarily perform complicated calculation for splicing. For instance, it can be set that the set top box directly plays a fixed gif animation. Specifically, when the set top box starts to download video data, a starting message event can be sent, and a browser actively displays the pre-set fixed gif animation in response to the event; and when the video data is loaded completely and is ready for being played, an ending message event is sent, and the browser closes the gif animation in response to the event. Thus, waste of the set top box resources due to calculation and generation of the prompt animation can be avoided, and the performance of the set top box can be further improved. In the present embodiment, the pre-set progress prompt animation can be directly stored in the set top box, or can be stored in the EPG server, and when the set top box needs to play the animation, the animation can be acquired from the EPG server.

By means of the above process, the set top box receives a multimedia data acquisition instruction sent by a user via a multimedia user interface and sends a corresponding multimedia data acquisition request to the EPG server, the EPG server downloads corresponding multimedia data from the Internet multimedia server according to the request and sends the multimedia data to the set top box, and after loading the multimedia data, the set top box starts to enter a program for playing the multimedia data. When currently played multimedia data resources come from an encrypted multimedia website, for instance, a video website such as youtube, multimedia players assigned by this website are needed during playing. It can be known, from the introductions, that the set top box has downloaded corresponding multimedia player data in advance in a user interface recording process, and in this case, it is only necessary to directly read the stored multimedia data to generate the corresponding player. In the present embodiment, in the generation process of the player, functions thereof can be supplemented, that is, interfaces of the player are expanded, thereby achieving a multimedia playing control function. For instance, when a player generated according to player data does not have fast-backward and fast-forward keys, interfaces of the player can be expanded to generate corresponding fast-forward and fast-backward keys. In the present embodiment, the playing implementation process of the set top box is specifically as follows.

For single multimedia (illustrated below with a video), some video websites such as Sohu and Boosj directly provide complete video resource Uniform Resource Locators (URL). But video resource URLs provided by some video websites such as youtube are incomplete, and complete video resource URL information may be obtained by assembling youtube api iframes provided. In this situation, the present embodiment divides implementation of a playing control frame into two parts: a playing control implementation layer and a playing control adaptation layer. The playing control implementation layer is necessary for accessing all video websites, and receives a playing control request of a user to control video playing. In a situation that the video website such as youtube provides a playing frame itself, the playing control adaptation layer intercepts, when a playing control frame provided by the user via the video website sends a command, the command, packages and converts the command, and sends the command to the playing control implementation layer finally so as to achieve a video playing control operation. Specifically, the playing control implementation layer can be generally divided into a service layer, a browser layer and a video stream operation control layer, wherein
the service layer receives a click event sent by a remote controller, and maps the click event to a corresponding video playing control event;
the browser layer needs to complete, after receiving the playing control event transmitted from a page, the following operations: identifying and parsing the event, locating a video stream operation interface which has been registered according to the event, and calling the video stream operation interface to send a control command to the video stream operation control layer; and
the video stream operation control layer achieves a video stream control operation according to the received control command, feeds back a processing result to the browser layer, and displays a playing control effect needed by the user via a television terminal finally.

The implementation of the playing control adaptation layer is embodied in the service layer. When a video website provides a js library for playing control itself, a defaulted video playing flow refers to that: when a video link is clicked to enter a video playing interface, a browser loads the js library firstly, after loading succeeds, an interface is called back, an event is sent to a page, after receiving a successful loading event, the page constructs an instance object of the js library, the object provides a series of interfaces, the page can call the interfaces to achieve video playing, and in the video playing process, a video playing state is monitored using a call-back function mechanism of the js library in real time. In the present embodiment, when the user invokes the interfaces of a page js library object by clicking the remote controller, the playing control adaptation layer intercepts an interface invoking event, converts the interface invoking event to a message event which can be identified by the browser, and then sends the message event to a browser layer in the playing control implementation layer for processing. Meanwhile, when a conventional js library object cannot meet a service demand, an interface such as a fast-forward interface and a fast-backward interface can be expanded according to an actual service demand.

### Second embodiment:

In order to better under the disclosure, the disclosure is further illustrated below in conjunction with a specific apparatus.

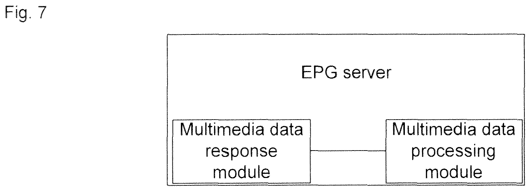

With reference to Fig. 6 and Fig. 7 respectively, a set top box shown in Fig. 6 includes a multimedia data request module and a multimedia data acquisition module, and an EPG server shown in Fig. 7 includes a multimedia data response module and a multimedia data processing module, wherein
the multimedia data request module is configured to send a multimedia data acquisition request to the EPG server;
the multimedia data response module is configured to receive the multimedia data acquisition request sent by the set top box;
the multimedia data processing module is configured to acquire corresponding multimedia data according to the multimedia data acquisition request, and feed the multimedia data back to the set top box; and
the multimedia data acquisition module is configured to receive multimedia data fed back by the EPG server according to the multimedia data request.

In the present embodiment, the set top box further includes a user interface data request module and a user interface data acquisition module, and the EPG server further includes a user interface data response module and a user interface data processing module, wherein
the user interface data request module is configured to send, before the multimedia data request module sends the multimedia data acquisition request to the EPG server, a multimedia user interface acquisition request to the EPG server;
the user interface data response module is configured to receive the multimedia user interface acquisition request sent by the set top box;
the user interface data processing module is configured to feed back multimedia user interface data to the set top box according to the multimedia user interface acquisition request; and
the user interface data acquisition module is configured to receive and load the multimedia user interface data fed back by the EPG server according to the multimedia user interface acquisition request.

In the present embodiment, the EPG server further includes a user data generation module, configured to generate the multimedia user interface data, wherein the generated user interface data includes main interface data generated according to multimedia classes in a multimedia website and multimedia list data generated according to current program information under each class. A specific generation process thereof will not be elaborated herein.

In the present embodiment, the EPG server further includes a player data download trigger module, and the set top box further includes a player data acquisition module, wherein
the player data download trigger module is configured to send, when determining that the multimedia user interface data requested by the set top box is user interface data corresponding to an encrypted multimedia website (for instance, a video website such as youtube), a multimedia player data download notice to the set top box in a process of loading the multimedia user interface data by the set top box, and the set top box completes download of corresponding multimedia player data according to the notice; and
the player data acquisition module is configured to download and store, when the multimedia player data download notice sent by the EPG server is received in the process of loading the multimedia user interface data by the user interface data acquisition module, the corresponding multimedia player data according to the multimedia player data download notice for use in a subsequent playing process.

It will be appreciated that those skilled in the art may understand that all or some of the steps in the above method and each of the above functional modules can be completed by instructing relevant hardware via a program, and the program may be stored in a computer readable storage medium such as a read-only memory, a magnetic disc or an optical disc. Optionally, all or some of the steps of the above embodiment may be implemented using one or more integrated circuits. Accordingly, each module/unit in the above embodiment may be implemented in a form of hardware or a form of a software function module. The disclosure is not limited to a combination of hardware and software in any specific forms.

The above is only the preferred embodiments of the disclosure and is not used to limit the protective scope of the disclosure.

### INDUSTRIAL APPLICABILITY

The embodiments of the disclosure provide a multimedia data acquisition method, a multimedia data sending method, a multimedia data interaction method, a set top box, an EPG server and a multimedia system. During multimedia data interactions, a set top box directly sends a request to an EPG server, and the EPG server downloads, according to the request, corresponding multimedia data from the Internet and feeds back the multimedia data to the set top box, unlike the conventional art in which the set top box directly downloads multimedia data from the Internet. The EPG server has much better performance than the set top box, and can acquire a large amount of multimedia information from the Internet more rapidly and reliably compared to the set top box, such that time required for accessing multimedia such as videos is greatly shortened, and thus the satisfaction in user experience is improved.

## Claims

1. A multimedia data acquisition method, comprising:
sending, by a set top box, a multimedia data acquisition request to an Electronic Program Guide (EPG) server; and
receiving, by the set top box, multimedia data fed back by the EPG server according to the multimedia data request.

2. The multimedia data acquisition method according to claim 1, further comprising:
before the set top box sends the multimedia data acquisition request to the EPG server,
sending a multimedia user interface acquisition request to the EPG server; receiving and loading multimedia user interface data fed back by the EPG server according to the multimedia user interface acquisition request; and
receiving a multimedia data acquisition instruction sent by a user via a multimedia user interface, and generating the multimedia data acquisition request.

3. The multimedia data acquisition method according to claim 2, further comprising:
playing, by the set top box, a pre-set progress prompt animation in the process of receiving the multimedia data and/or in the process of loading the multimedia user interface data.

4. The multimedia data acquisition method according to claim 2, further comprising:
in the process of loading, by the set top box, the multimedia user interface data, when a multimedia player data download notice sent by the EPG server is received, downloading and storing corresponding multimedia player data according to the multimedia player data download notice; and when the multimedia data is played, directly calling the stored multimedia player data to generate a corresponding player.

5. The multimedia data acquisition method according to claim 4, further comprising:
in the process of calling the multimedia player data to generate the player, expanding an interface of the player.

6. A multimedia data sending method, comprising:
receiving, by an Electronic Program Guide (EPG) server, a multimedia data acquisition request sent by a set top box; and
acquiring, by the EPG server, corresponding multimedia data according to the multimedia data acquisition request, and sending the multimedia data to the set top box.

7. The multimedia data sending method according to claim 6, further comprising:
before the EPG server receives the multimedia data acquisition request sent by the set top box,
receiving a multimedia user interface acquisition request sent by the set top box; and
feeding back multimedia user interface data to the set top box according to the multimedia user interface acquisition request.

8. The multimedia data sending method according to claim 7, wherein the multimedia user interface data comprises: main interface data generated by the EPG server according to multimedia classes in a multimedia website, and multimedia list data generated according to current program information under each class.

9. The multimedia data sending method according to claim 8, further comprising:
when the EPG server determines that the multimedia user interface data requested by the set top box is user interface data of an encrypted multimedia website, sending a multimedia player data download notice to the set top box in a process of loading, by the set top box, the multimedia user interface data.

10. A multimedia data interaction method, comprising:
sending, by a set top box, a multimedia data acquisition request to an Electronic Program Guide (EPG) server;
acquiring, by the EPG server, corresponding multimedia data according to the multimedia data acquisition request, and feeding back the multimedia data to the set top box; and
receiving, by the set top box, multimedia data fed back by the EPG server.

11. A set top box, comprising a multimedia data request module and a multimedia data acquisition module,
wherein the multimedia data request module is configured to send a multimedia data acquisition request to an Electronic Program Guide (EPG) server; and
the multimedia data acquisition module is configured to receive multimedia data fed back by the EPG server according to the multimedia data request.

12. The set top box according to claim 11, further comprising a user interface data request module and a user interface data acquisition module,
wherein the user interface data request module is configured to send, before the multimedia data request module sends the multimedia data acquisition request to the EPG server, a multimedia user interface acquisition request to the EPG server; and
the user interface data acquisition module is configured to receive and load multimedia user interface data fed back by the EPG server according to the multimedia user interface acquisition request.

13. The set top box according to claim 12, further comprising a player data acquisition module configured to download and store, when a multimedia player data download notice sent by the EPG server is received in the process of loading, by the user interface data acquisition module, the multimedia user interface data, corresponding multimedia player data according to the multimedia player data download notice.

14. An Electronic Program Guide (EPG) server, comprising a multimedia data response module and a multimedia data processing module,
wherein the multimedia data response module is configured to receive a multimedia data acquisition request sent by a set top box; and
the multimedia data processing module is configured to acquire corresponding multimedia data according to the multimedia data acquisition request, and send the multimedia data to the set top box.

15. The EPG server according to claim 14, further comprising a user interface data response module and a user interface data processing module,
wherein the user interface data response module is configured to receive, before the multimedia data response module receives the multimedia data acquisition request sent by the set top box, a multimedia user interface acquisition request sent by the set top box; and
the user interface data processing module is configured to feed back multimedia user interface data to the set top box according to the multimedia user interface acquisition request.

16. The EPG server according to claim 15, further comprising a user data generation module configured to generate the multimedia user interface data, wherein the generated user interface data comprises main interface data generated according to multimedia classes in a multimedia website, and multimedia list data generated according to current program information under each class.

17. The EPG server according to claim 16, further comprising a player data download trigger module configured to send, when determining that the multimedia user interface data requested by the set top box is user interface data corresponding to an encrypted multimedia website, a multimedia player data download notice to the set top box in a process of loading, by the set top box, the multimedia user interface data.

18. A multimedia system, comprising a set top box and an Electronic Program Guide (EPG) server, wherein the set top box comprises a multimedia data request module and a multimedia data acquisition module, and the EPG server comprises a multimedia data response module and a multimedia data processing module,
wherein the multimedia data request module is configured to send a multimedia data acquisition request to the EPG server;
the multimedia data response module is configured to receive the multimedia data acquisition request sent by the multimedia data request module;
the multimedia data processing module is configured to acquire corresponding multimedia data according to the multimedia data acquisition request, and feed the multimedia data back to the set top box; and
the multimedia data acquisition module is configured to receive multimedia data fed back by the multimedia data processing module.
